# EUROPEAN PATENT SPECIFICATION

(11) **EP 4 101 707 B1**
(45) Date of publication and mention of the grant of the patent: **09.04.2025**
(21) Application number: 22178362.4
(22) Date of filing: 10.06.2022
(51) Int. Cl.: B60T 7/04, B60T 8/171, B60T 8/34, B60T 8/40, B60T 13/14, B60T 13/16, B60T 13/66, B60T 13/74

(54) **PRESSURE SUPPLY UNIT FOR A BRAKE SYSTEM OF A VEHICLE**
DRUCKVERSORGUNGSEINHEIT FÜR EINE BREMSANLAGE EINES FAHRZEUGS
UNITÉ D'ALIMENTATION EN PRESSION POUR UN SYSTÈME DE FREINAGE D'UN VÉHICULE

(30) Priority: 12.06.2021 US 202117346240; 07.06.2022 CN 202210634158
(43) Date of publication of application: 14.12.2022
(73) Proprietor: BWI (Shanghai) Co., Ltd., Shanghai 200131 (CN)
(72) Inventor: SCHLANGEN, Trevor Matthew, Moraine, OH 45439 (US); HIGGINS, Eric Michael, Dayton, OH 45458 (US); REUTER, David Fredrick, Beavercreek, OH 45434 (US); D'AMICO, Brian Marc, Moraine, OH 45439-1514 (US); PIRRELLO, Frank Gerard, Dayton, OH 45458 (US); PESAREK, Anthony Vincent, Dayton, OH 45410 (US)
(74) Representative: Lukaszyk, Szymon

(56) References cited:
- WO-A1-2019/003944
- CN-A- 107 435 696
- DE-A1- 102017 113 725
- JP-B2- 6 344 721
- US-A1- 2002 116 924
- US-A1- 2010 242 469
- US-A1- 2018 170 328
- US-B2- 10 814 851

## Description

### Technical Field

A pressure supply unit for a brake system of a vehicle such as an automobile.

### Background

Pressure supply units are used in conjunction with electro-hydraulic brake-by-wire systems for vehicles such as automobiles to provide brake pressure in place of a traditional booster, master cylinder and brake pedal arrangement. Pressure supply units are commanded by an Electronic Control Unit (ECU) which derives signals from a driver via sensors in a pedal feel emulator and/or from an auto pilot that can self-apply the brakes without driver intervention. Pressure supply units typically include a motor comprised of a stator and a rotatable rotor container within the stator, with the rotor housing a high efficiency screw assembly which is furthermore attached to a piston contained in a cylinder of a booster body. Rotation of the rotor effectuates translating movement of the spindle and piston, thereby causing the brake pressure change for effectuating the brakes.

There remains a continued need for improvements to such pressure supply units.
Document WO2019003944A1 discloses an electric booster device and a booster device. In this electric booster device, a housing is provided with: a rear housing comprising a vehicle mounting plate; a front housing disposed between a master cylinder and the rear housing; and coupling members for coupling the master cylinder and the rear housing, with the front housing therebetween. When hydraulic pressure is generated in the master cylinder, the hydraulic reaction force from the master cylinder is thus transmitted to a first rear housing part via the coupling members, thereby making it possible to reduce the rigidity of the front housing. This makes it possible to make the electric booster device more compact and lightweight.
Document US 2018/170328 A1 discloses an electric booster. Provided is an electric booster which can be downsized by enhancing space efficiency while reducing the effect of a magnetic field from outside on a magnetic sensor by means of a magnetic shield. The stroke amount of an input plunger 29 connected to a brake pedal 6 is detected by a stroke detection sensor. The operation of an electric motor is controlled by controller on the basis of the stroke amount of the input plunger to thrust a primary piston through a ball screw mechanism, and brake fluid pressure is thus generated by a master cylinder. The stroke detection device uses a Hall IC to detect magnetic flux densities from first and second magnet members mounted on the input plunger to obtain the stroke of the input plunger. The first and second magnet members and the Hall IC are disposed inside a linear-motion member formed of a cylindrical magnetic body of the ball screw mechanism to be magnetically shielded.
Document US 2002/116924 A1 discloses a master cylinder for use in power trains of motor vehicles. A master cylinder for use in the power train of a motor vehicle to actuate the brakes or the friction clutch is designed to avoid the generation of screeching noise and/or the transmission of stray movements to the piston rod in response to shifting of the piston relative to the housing and relative to the sealing element(s) between the piston and the housing. This can be accomplished by causing the piston to turn relative to the housing and the sealing element(s) during axial movement in the housing and/or by installing one or more dampers between the piston and the housing and/or between the piston and the piston rod. The dampers can constitute separately produced parts and/or specially configured and/or finished surfaces provided on the piston and contacting the housing and/or the sealing element(s). The invention also relates to improvements in the configuration and/or the material(s) of the piston.
Document US 10814851 B2 discloses a brake master cylinder arrangement with position transmitter element and coupling arrangement therefor. The invention relates to a brake master cylinder arrangement for a motor vehicle brake system, comprising at least one piston arrangement with: a pressure piston unit that can be moved along a movement axis and, together with a housing arrangement of the brake master cylinder arrangement, defines a pressure chamber; and a force input member that can be moved according to the actuation of the brake pedal and is coupled, or can be coupled, to the pressure piston unit so as to move therewith, the brake master cylinder also comprising: a position transmitter element that can be moved according to the actuation of the force input member; a detection unit designed to detect a movement of the position transmitter element; and a coupling arrangement designed to couple the position transmitter element to at least one element of the piston arrangement in a substantially rigid manner, along the movement axis, the coupling arrangement also being designed to allow a rotation of the at least one element of the piston arrangement in relation to the position transmitter element about the movement axis.
Document DE 102017113725 A1 discloses a piston cylinder arrangement. This invention concerns a piston cylinder arrangement, comprising a housing-like cylinder in which a piston is axially movable, which can be operated by a piston rod moving through an external mechanical unit, whereby a spherical head of the piston rod is mechanically fixed on one end side of the piston. In the case of a piston cylinder arrangement, which can be mounted blindly, the spherical head of the piston rod is partially surrounded by a convex spherical shape, which, together with the spherical head, intervenes in a concave axial discharge in the front side of the piston.
Document CN 107435696 A discloses a transmitter hydraulic cylinder for hydraulic control device. The present invention relates to a transmitter hydraulic cylinder for a hydraulic control device, including: a piston configured to be slidable along an axis; and a control rod having one side installed in a joint connection manner in a driving element, such as a pedal, and the other side connected to the piston by a joint connection portion. One of the joint connection portions allows the transmitter hydraulic cylinder to operate, and the other allows the control rod to rotate according to two degrees of freedom facilitating the fastening of the control rod with respect to the driving element. All of the joint connection portions limit the relative rotation between the control rod and the piston about an axis.

### Summary

According to an aspect of the invention, a pressure supply unit is provided for a brake system. The pressure supply unit comprises a booster body that defines a cylinder that extends along an axis. A piston is axially slideable within the cylinder. The piston defines a bore along the axis. A spindle extends along the axis and is received by the bore of the piston. The spindle is rotationally fixed and axially moveable for providing the axial movement of the piston. A motor is positioned about the spindle and is configured to axially translate the spindle for providing the axial movement of the piston. A ball and socket joint couples the spindle to the piston and is located within the bore defined by the piston. The ball and socket joint comprises a ball at a front end of the spindle and a socket in the bore of the piston and which receives the ball to accommodate pivoting movement of the spindle relative to the piston. The ball has a generally constant diameter but defines at least one scored segment for providing lateral movement of the ball relative to the socket while allowing the ball to inhibit axial movement of the ball outside of the socket, wherein the ball defines a plurality of scored segments in spaced relationship with one another.

The ball and socket joint provides a simple manner of accommodate pivoting movement of the spindle relative to the piston, thus providing reduced wear of the spindle and piston.

According to another aspect of the invention, a pressure supply unit is provided for a brake system. The pressure supply unit comprises a booster body that defines a cylinder extending along an axis. A piston is axially slideable within the cylinder. The piston defines a bore along the axis. A spindle extends along the axis and is received by the bore of the piston. The spindle is rotationally fixed and axially moveable for providing the axial movement of the piston. A motor is positioned about the spindle and configured to axially translate the spindle for providing the axial movement of the piston. The motor comprises an annular stator and an annular rotor rotatable within the stator in response to a current passing into the stator. At least one gear is rotatable in response to rotation of the rotor and is configured to rotate a magnet. A sensor is provided for detecting rotation of the magnet to determine a rotor angle of the rotor.

The arrangement of the at least one gear and sensor provide a simple, compact and reliable method for detecting a rotor angle of the rotor.

According to another aspect of the invention, a pressure supply unit is provided for a brake system. The pressure supply unit comprises a booster body that defines a cylinder extending along an axis. A motor cover is coupled to the booster body and defines a compartment. A piston is axially slideable within the cylinder. The piston defines a bore along the axis. A spindle extends along the axis and is received by the bore of the piston. The spindle is rotationally fixed and axially moveable for providing the axial movement of the piston. A motor is positioned about the spindle in the compartment of the motor cover and configured to axially translate the spindle for providing the axial movement of the piston. The motor comprises an annular stator and an annular rotor rotatable within the stator in response to a current passing into the stator. An anti-rotation sleeve is disposed about the spindle and fixed to the motor cover. The anti-rotation sleeve is configured to inhibit rotation of the spindle while permitting axial movement of the spindle. The motor cover presents an axially extending annular protrusion defining a pocket inside the compartment inside the motor cover. The anti-rotation sleeve is fixed to the motor cover inside the pocket.

The arrangement of the anti-rotation sleeve is fixed to the pocket of the motor cover provides a compact and simple arrangement for preventing rotation of the spindle. This arrangement further allows the motor cover to be constructed without a separate end cap on the motor housing.

### BRIEF DESCRIPTION OF THE DRAWINGS

Other advantages of the present invention will be readily appreciated, as the same becomes better understood by reference to the following detailed description when considered in connection with the accompanying drawings wherein:
FIG. 1 is a cross-sectional side view of an example embodiment of a pressure supply unit;
FIG. 2 is an exploded, perspective view of pressure supply unit;
FIG. 3 is a cutaway, perspective view of a rotor and nut of the pressure supply unit;
FIG. 4 is an exploded, cutaway, perspective view of an anti-rotation sleeve of the pressure supply unit, illustrating its connection to a spindle;
FIG. 5 is a perspective view of the anti-rotation sleeve, illustrating a planar surface for fixing the anti-rotation sleeve to a motor cover;
FIG. 6 is a perspective view of a protrusion of a motor cover, illustrating the protrusion receiving and fixed to the anti-rotation sleeve;
FIG. 6A is a front cross-sectional view of a pair of staked portions of the motor cover engaging planar surfaces of the anti-rotation sleeve;
FIG. 7 is a perspective view of a ball of a ball and socket joint located at the end of the spindle, illustrating a plurality of scored segments on the ball;
FIG. 8 is a magnified, cutaway view of the ball and socket joint, illustrating the scored segments relative to the socket;
FIG. 9 is a perspective view of the pressure supply unit, illustrating an arrangement in which the piston is installed in the booster body prior to being connected to the spindle with the ball and socket joint;
FIG. 10 is a perspective view of the pressure supply unit, illustrating an arrangement in which the piston and spindle are pre-assembled with the ball and socket joint prior to being connected to the booster body;
FIG. 11 is a perspective exploded view of the arrangements of FIGS. 9-10;
FIG. 12 is a perspective cutaway view of the pressure supply unit, illustrating an alternate arrangement of a rotor angle sensor assembly;
FIG. 13 is a side cutaway view of the pressure supply unit, illustrating the alternate arrangement of the rotor angle sensor assembly;
FIG. 14 is a perspective exploded view of the pressure supply unit, illustrating a gear of the alternate arrangement of the rotor angle sensor assembly;
FIG. 15 is a perspective view of an arrangement of the pressure supply unit in which a single master cylinder hydraulic control unit block has an extruded, transverse boss which defines the cylinder;
FIG. 16 is a cutaway view of FIG. 15;
FIG. 17 is a perspective view of an arrangement of the pressure supply unit including a simplified sleeve which defines the cylinder;
FIG. 18 is a cutaway view of FIG. 17;
FIG. 19 is a perspective view of an arrangement of the pressure supply unit in which master cylinder block is incorporated with a parallel motor layout; and
FIG. 20 is a cutaway view of FIG. 19.

### Description of The Enabling Embodiment

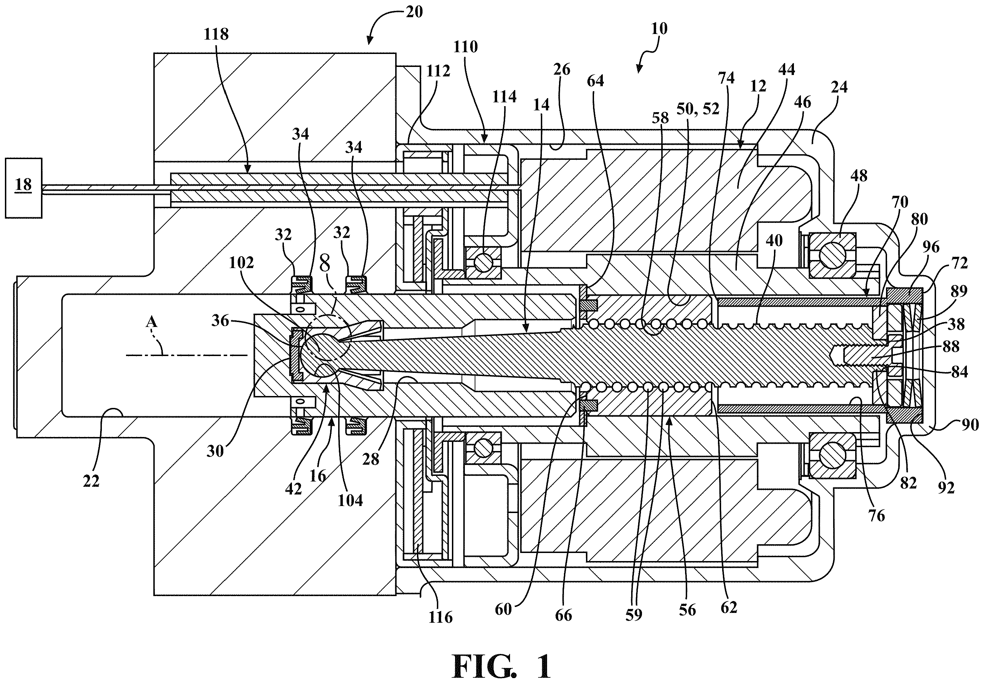

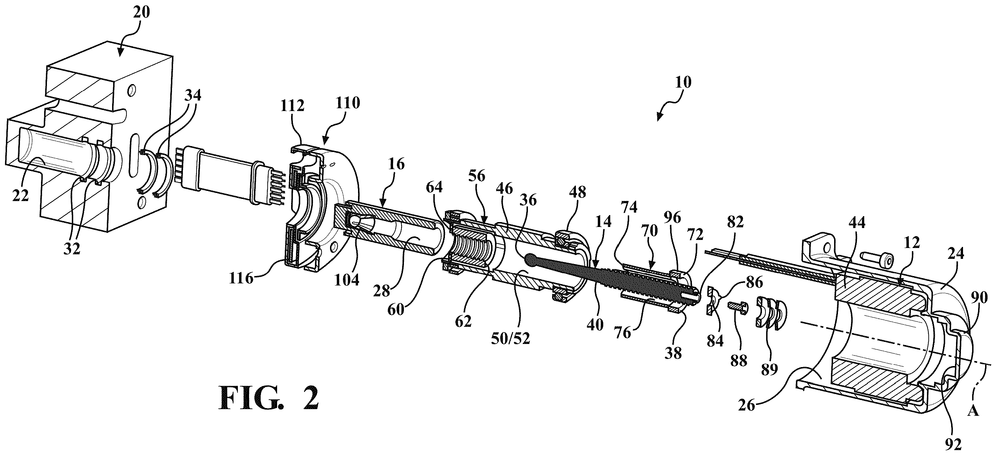

Referring to the figures, wherein like numerals indicate corresponding parts throughout the several views, a pressure supply unit 10 is generally shown for a brake system of an automobile. More particularly, as best shown in FIGS. 1 and 2, the subject pressure supply unit 10 is used in conjunction with an electro-hydraulic brake-by-wire system where a motor 12, spindle 14, and piston 16 provide brake pressure in place of a traditional booster, master cylinder and brake pedal arrangement. The pressure supply unit 10 is commanded by an Electronic Control Unit (ECU) 18 (schematically shown) with derived signals from a traveler and/or forced sensor in a pedal feel emulator and/or from an auto pilot which can initiate braking independent of a driver. The pedal fee emulator provides brake pedal feel and feedback to a driver while a manual backup system is isolated from wheel brake circuits.

In more detail, the pressure supply unit 10 includes a booster body 20 that defines a cylinder 22 that extends along an axis. A motor cover 24 axially engages the booster body 20 and defines a compartment 26. The piston 16 is axially received by the cylinder 22 and axially slideable within the cylinder 22 and the compartment 26 of the motor cover 24 for creating a brake pressure in the cylinder 22 in response to the sliding movement of the piston 16. The piston 16 defines a bore 28 along the axis A, with the bore 28 terminating axially at an end 30. The booster body 20 further includes a pair of recesses 32 that extend radially outwardly into the booster body 20 from the cylinder 22, and extend annularly about the axis A. Each of the recesses 32 receives one of a pair of seals 34 that are configured to prevent the passage of fluid between the booster body 20 and piston 16 in the cylinder 22.

The spindle 14 extends axially between a front end 36 received in the bore 28 of the piston 16, and a rear end 38 located axially outside of the bore 28 in the compartment 26 of the motor cover 24. The spindle 14 presents a threaded outer surface 40. A ball and socket joint 42 (discussed in further detail below) connects the spindle 14 to the piston 16 in the bore 28.

The motor 12 is positioned about the spindle 14 in the compartment 26 of the motor cover 24. The motor 12 is configured to axially translate the spindle 14 for providing the axial movement of the piston 16. More particularly, the motor 12 includes an annular stator 44 and an annular rotor 46, each positioned about the axis A. The annular rotor 46 has a magnetic outer surface and is rotatable within the stator 44 about the axis A in response to a current being applied to the stator 44. One or more bearings 48 are positioned radially between the rotor 46 and the motor cover 24 for accommodating rotation of the rotor 46 relative to the booster body 20. As schematically shown, the motor 12 is connected to the ECU 18 to provide desired actuation of the motor 12.

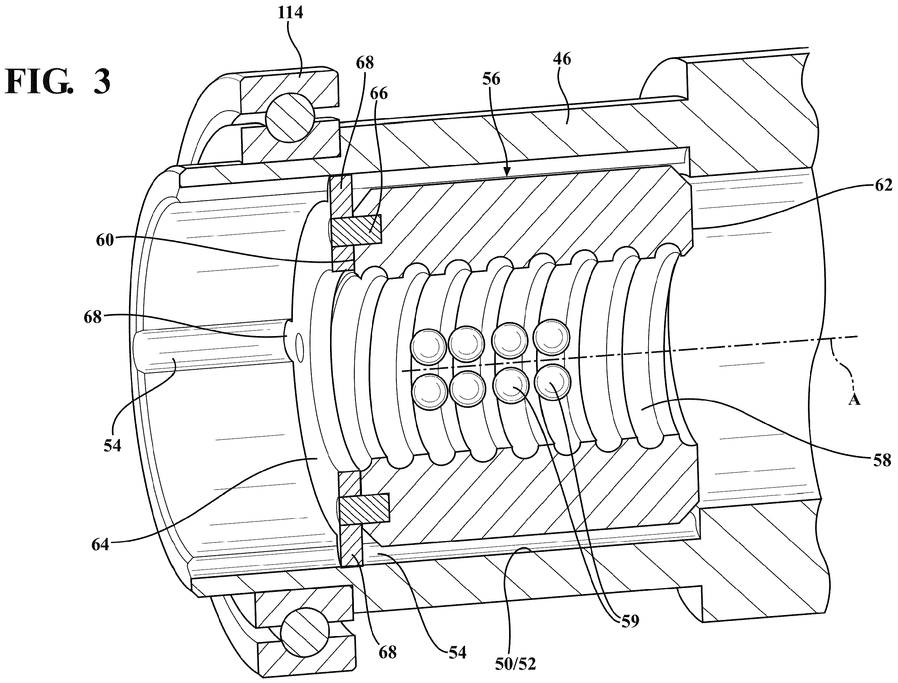

The rotor 46 presents an inner wall 50 that defines a channel 52 along the axis A. The channel 52 partially receives the piston 16 and receives the spindle 14. As best shown in FIG. 3, the inner wall 50 of the rotor 46 further defines a plurality of grooves 54 that extend axially and are arranged in circumferentially spaced relationship with one another.

A nut 56 is fixed to the inner wall 50 of the rotor 46 and is configured to convert rotational movement of the rotor 46 into axial translation of the spindle 14. More particularly, the nut 56 presents a threaded inner surface 58 that is threadedly connected to the threaded outer surface 40 of the spindle 14 for providing axial movement of the spindle 14 in response to rotation of the rotor 46 and nut 56. The threaded connection between the nut 56 and spindle 14 may include a plurality of ball bearings 59 for facilitating rotation between the components. A conventional threaded connection comprised exclusively inner threads and outer threads may also be employed. The nut 56 extends axially between a first nut end 60 and a second nut end 62. A retainer plate 64 is fixed axially against the first nut end 60. A plurality of fasteners 66, such as bolts or the like, axially and rotationally fix the retainer plate 64 to the first nut end 60. The retainer plate 64 presents a plurality of guides 68 that extend radially outwardly from an outer circumference of the retainer plate 64. Each of the guides 68 are received by one of the grooves 54 of the rotor 46 to permit axially movement of the retainer plate 64 and nut 56 relative to the rotor 46 during assembly while inhibiting rotational movement of the retainer plate 64 and nut 56 relative to the rotor 46.

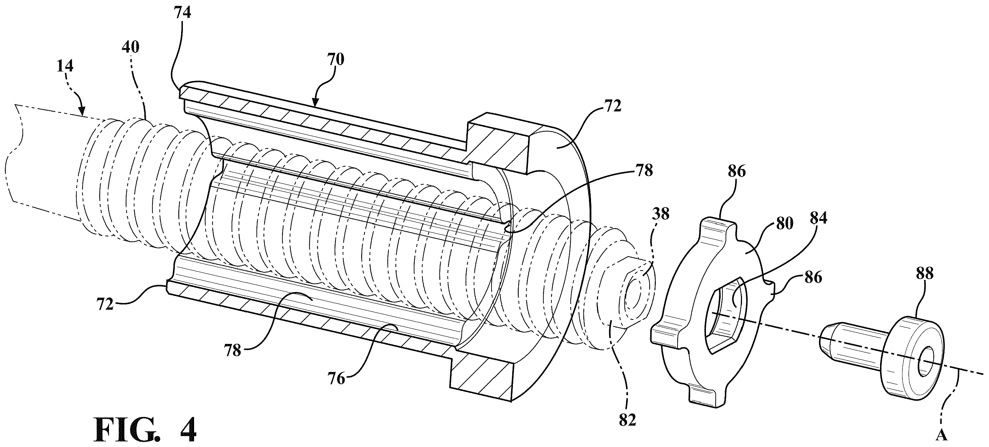

As best shown in FIG. 4, an anti-rotation sleeve 70 is disposed about the spindle 14 and fixed to the booster body 20. The anti-rotation sleeve 70 is configured to inhibit rotation of the spindle 14 while permitting axial movement of the spindle 14. The anti-rotation sleeve 70 extends axially between a proximal end 72 axially engaging the motor cover 24 and a distal end 74 axially engaging the second nut end 62 of the nut 56. The anti-rotation sleeve 70 defines a radially inside wall 76. The inside wall 76 of the anti-rotation sleeve 70 defines a plurality of grooves 78 that extend axially and spaced circumferentially from one another. A retainer 80 is located about the axis A inside the anti-rotation sleeve 70 and keyed to the rear end 38 of the spindle 14. A generally rectangular-shaped protrusion 82 extends axially at the rear end 38 of the spindle 14. The retainer 80 defines an opening 84 that has substantially the same shape as the protrusion 82, and receives the protrusion 82 to key the retainer 80 to the spindle 14. The retainer 80 presents a plurality of fingers 86 that extend radially outwardly from an outer circumference of the retainer 80, with each finger 86 each received by one of the grooves 78 of the inside wall 76 of the anti-rotation sleeve 70 to inhibit rotational movement of the retainer 80 and spindle 14 while permitting axial movement of the retainer 80 and spindle 14 relative to the anti-rotation sleeve 70. A bolt 88 or the like is threadedly received by the protrusion 82 along the axis A and axially secures the retainer 80 to the spindle 14. As best shown in FIGS. 1 and 2, one or more wave washers 89 or other spring elements are positioned axially between the retainer 80 and the motor cover 24 for accommodating axial movement of the spindle 14 toward the motor cover 24.

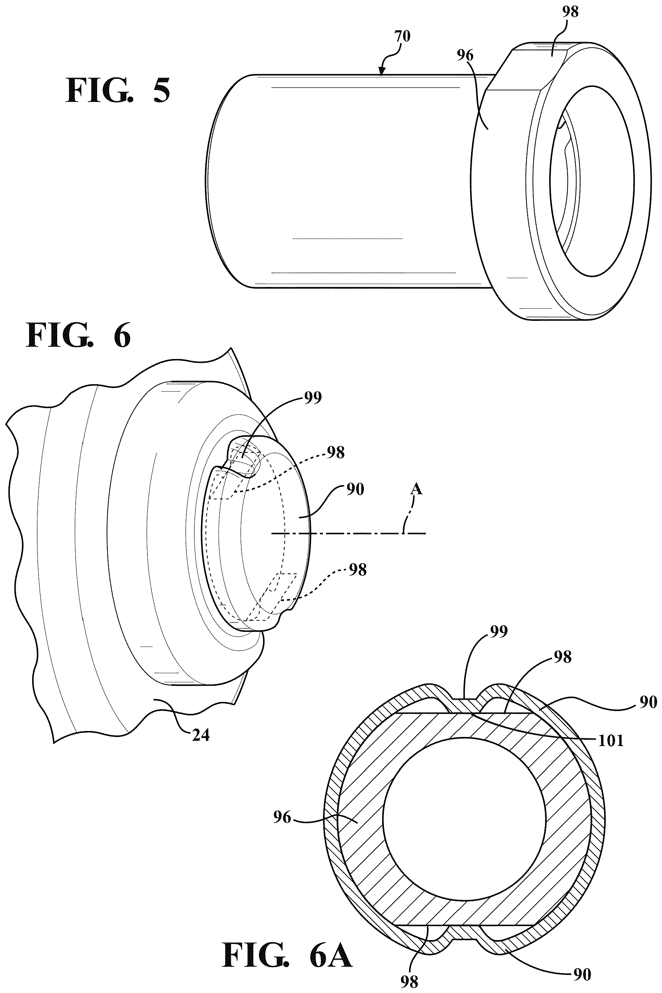

As best shown in FIGS. 1 and 5-6A, the motor cover 24 presents an axially extending annular protrusion 90 that defines a pocket 92 inside the compartment 26 of the motor cover 24. The anti-rotation sleeve 70 is rotationally fixed to the motor cover 24 inside the pocket 92. More particularly, the anti-rotation sleeve 70 presents a flange 96 that extends radially outwardly at its proximal end 72. The flange 86 presents at least one first planar surface 98 along a radially outer surface of the flange 86. According to the example embodiment, a pair of first planar surfaces 98 are located on circumferentially opposite sides of the anti-rotation sleeve 70, however any number of first planar surfaces 98 could be employed. As best shown in FIG. 6A, an outer surface of the protrusion 90 is compressed / punched radially inwardly in circumferential alignment with each of the first planar surfaces 98 of the anti-rotation sleeve 70 to define one or more staked portions 99 for axially and rotationally fixing the anti-rotation sleeve 70 to the motor cover 24. The staked portions 99 may include one or more second planar surfaces 101 that overly the planar surfaces 98 to further aid in preventing rotation of the anti-rotation sleeve 70 relative to the motor cover 24.

As best shown in FIGS. 1 and 7-8. the ball and socket joint 42 includes a ball 102 at the front end 36 of the spindle 14, and a socket 104 adjacent to the end 30 of the bore 28 of the piston 16. The socket 104 receives the ball 102 to accommodate pivoting movement of the spindle 14 relative to the piston 16. The ball and socket joint 42 includes an insert 106 received in the bore 28 of the piston 16 and fixed to the piston 16 adjacent to the end 30 of the bore 28. The insert 106 defines the socket 104.

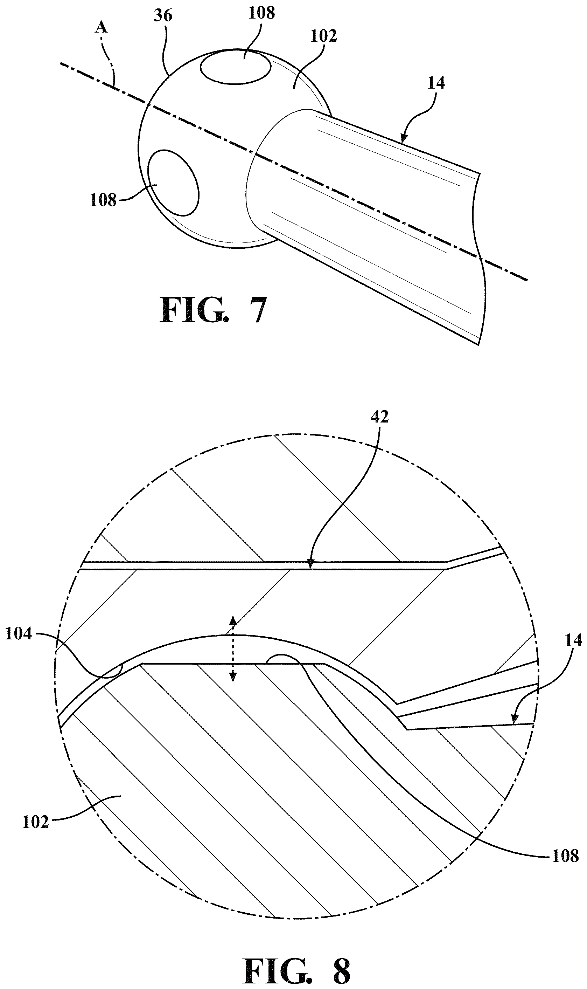

As best shown in FIGS. 7-8, the ball 102 defines at least one scored segment 108 for providing lateral movement of the ball 102 relative to the socket 104 while the ball 102 still inhibits pulling the spindle 14 axially free from the socket 104. According to the example embodiment, the ball 102 defines a plurality of the scored segments 108 in spaced relationship with one another. Four scored segments 108 may be equally circumferentially spaced around the ball 102 to provide lateral movement in vertical and horizontal directions. Because of the scored segments 108, the ball and socket joint 42 helps to compensate for any angular misalignment between the piston 16 and spindle 14 to minimize premature wear out of the ball screw by minimizing side loads. The arrangement of the ball and socket joint 42 and piston 16 also eliminates the need for a separate sleeve with an anti-rotation feature, thus significantly reducing cost and assembly complexity. Furthermore, with careful sizing and/or shaping of the ball 102, small clearances can be maintained after insertion. This allows additional degrees of lateral freedom to assure elimination of binding of the spindle 14 at the ball 102. Since the ball 102 is primarily unilaterally loaded by system brake pressure, small amount of travel at the start position of the ball 102 can be easily compensated for.

It should be appreciated that due to the locations and arrangements of the anti-rotation sleeve 70 and ball and socket joint 42, side loads between piston 16 and spindle 14 are virtually non-existent.

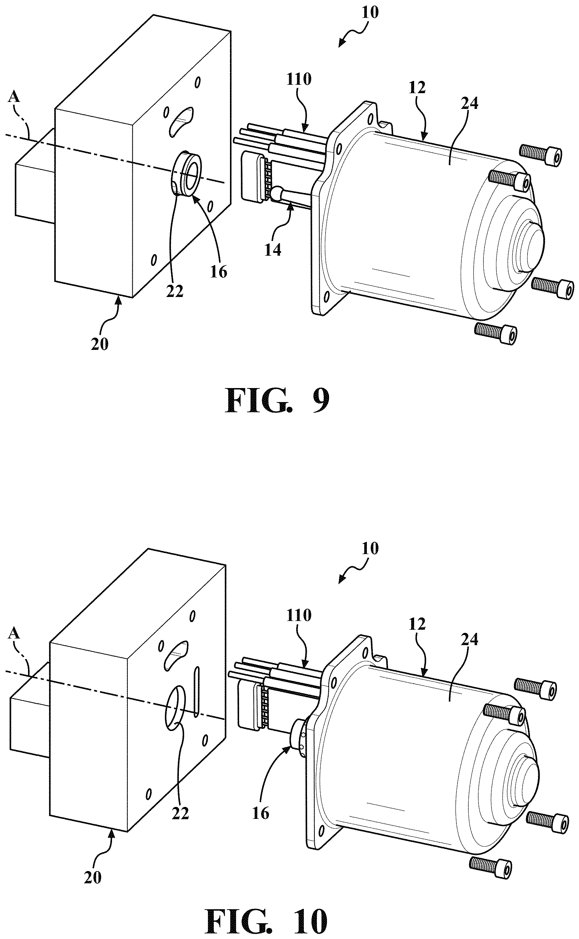

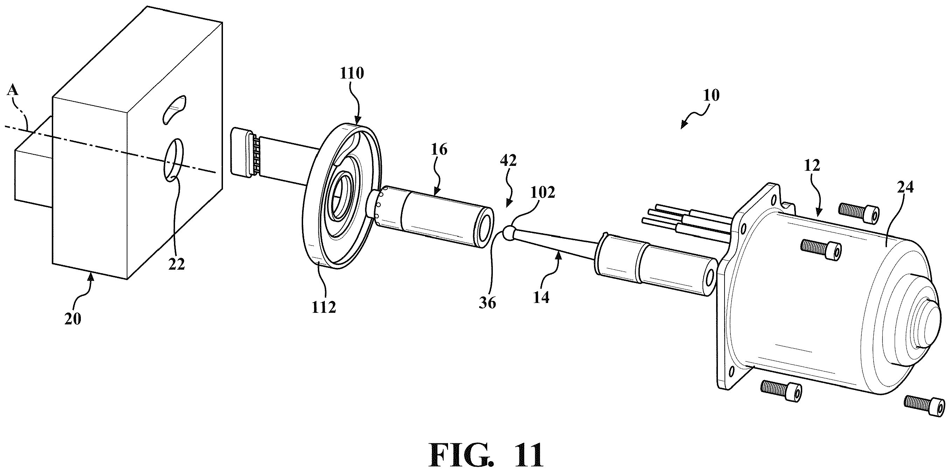

As set forth in FIGS. 9-10, due to the aforementioned arrangement of the piston 16 and ball and socket joint 42, two different assembly operations may be employed for installing the piston 16 and ball and socket joint 42. More particularly, according to a first operation illustrated in FIG. 9, the piston 16 may first be installed in the booster body 20, and the ball and socket joint 42 may be snapped together after installation of the piston 16. Alternatively, as illustrated in FIG. 10, the ball and socket joint 42 and piston 16 may be assembled in advance, and the piston 16 may subsequently be inserted into the cylinder 22 of the booster body 20. FIG. 11 shows an exploded assembly view of both of these arrangements.

As best shown in FIGS. 1-2, a capacitive rotor angle sensor assembly 116 may be positioned about the rotor 46 and located axially between the stator 44 and the booster body 20. The capacitive rotor angle sensor assembly 116 includes a motor support plate 110 positioned axially against the booster body 20 in the compartment 26 of the motor cover 24 and positioned about the piston 16. At least one sensor bearing 114 is located between the motor support plate 110 and the rotor 46 in order to allow relative rotation between the motor support plate 110 and rotor 46. The capacitive rotor angle sensor assembly 116 includes a plurality of electrical connectors 118 electrically connecting the capacitive rotor angle sensor assembly 116 to the ECU 18 for transmitting rotor angle data 110.

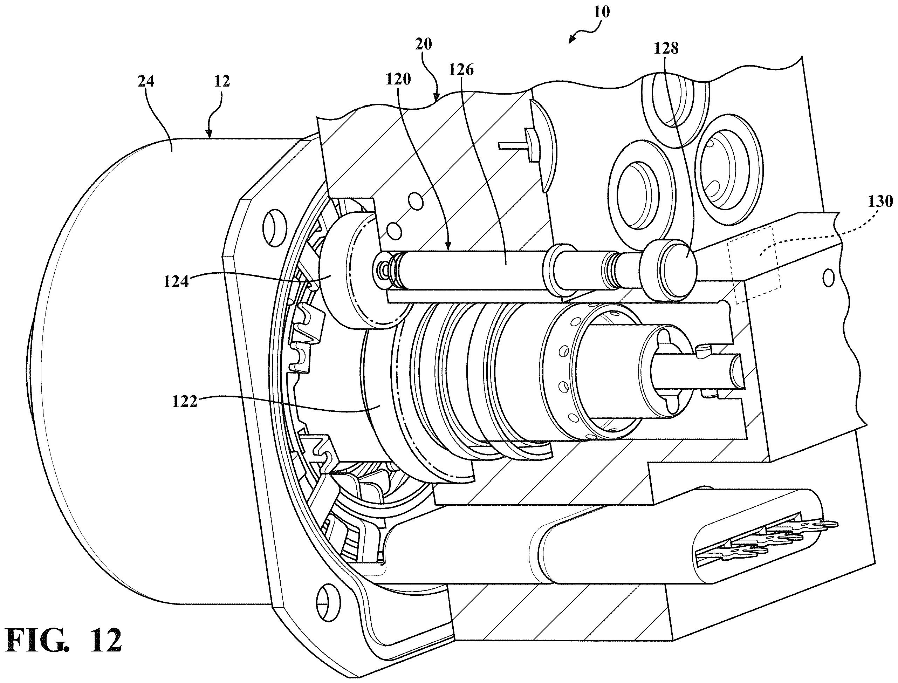

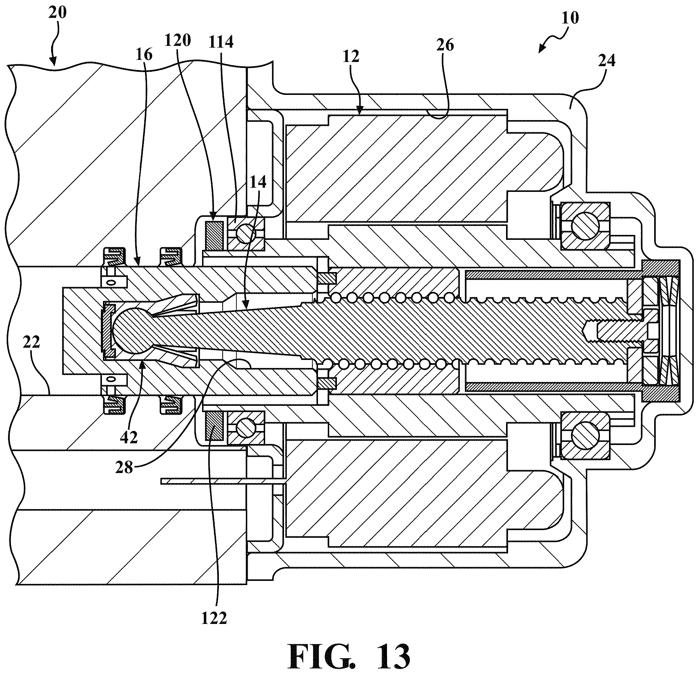

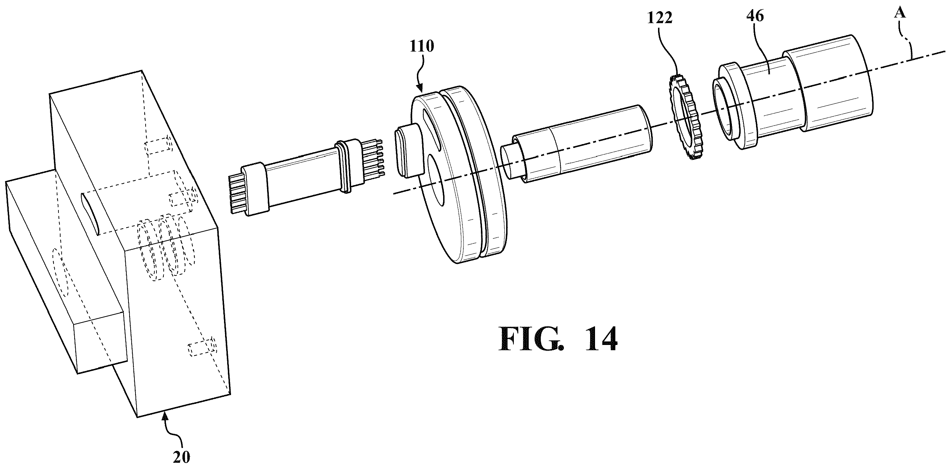

According to an alternate embodiment of a rotor angle sensor assembly 120 best presented in FIG. 12, a first gear 122 is rotatable with the rotor 46. A second gear 124 is meshed with the first gear 122. An axially extending rod 126 is rotatable with the second gear 124 and is connected to a magnet 128. A magnet sensor 130 is configured to detect the magnet 128 for determining rotor angle data and transmitting the rotor angle data to the ECU 18. FIG. 13 illustrates that according to this arrangement, the first gear 122 may have a smaller diameter than the sensor bearing 114. Accordingly, the sensor bearing 114 can be designed with the motor cover 24 as a "half-in / half-out" design and be used to pilot the motor 12 into the booster body 20. FIG. 14 illustrates a connection of a first gear 122 to a rotor 46 according to this embodiment.

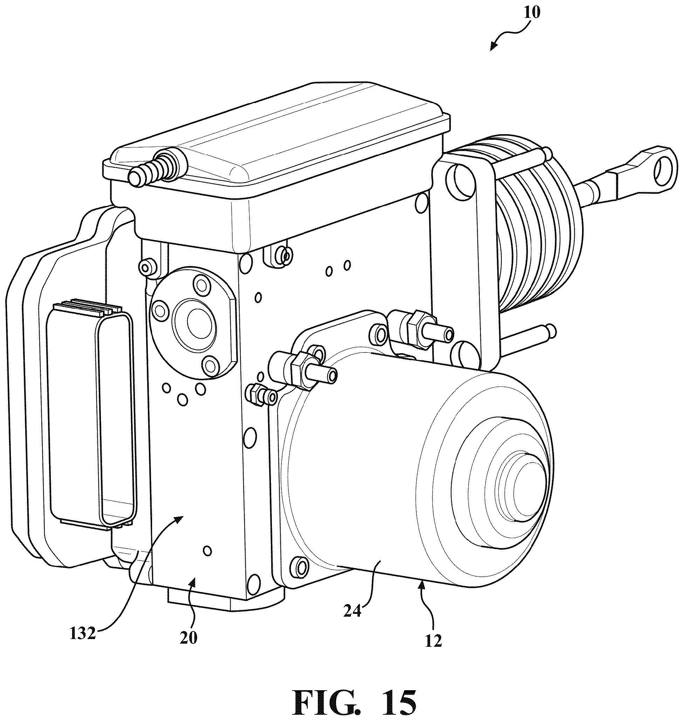

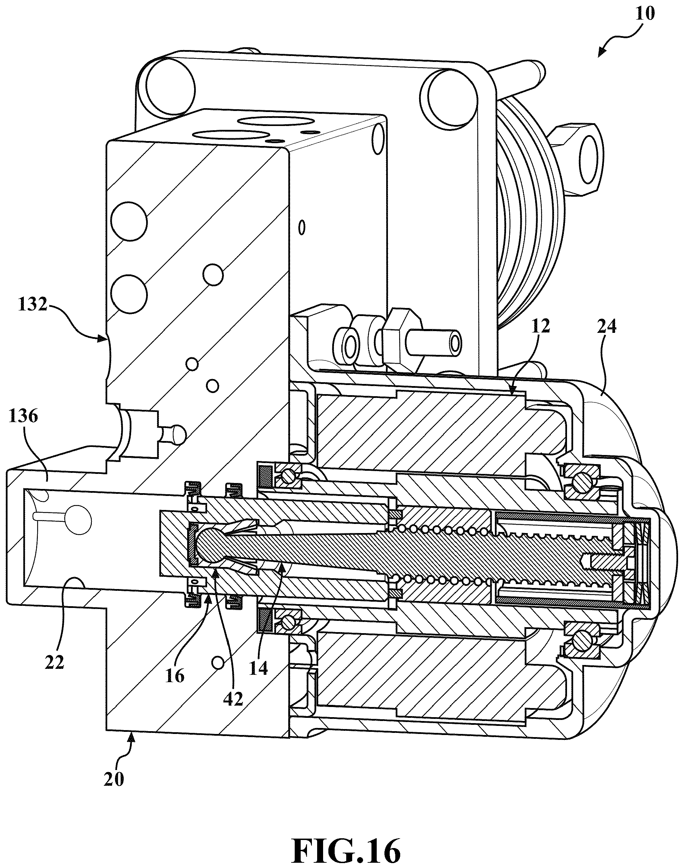

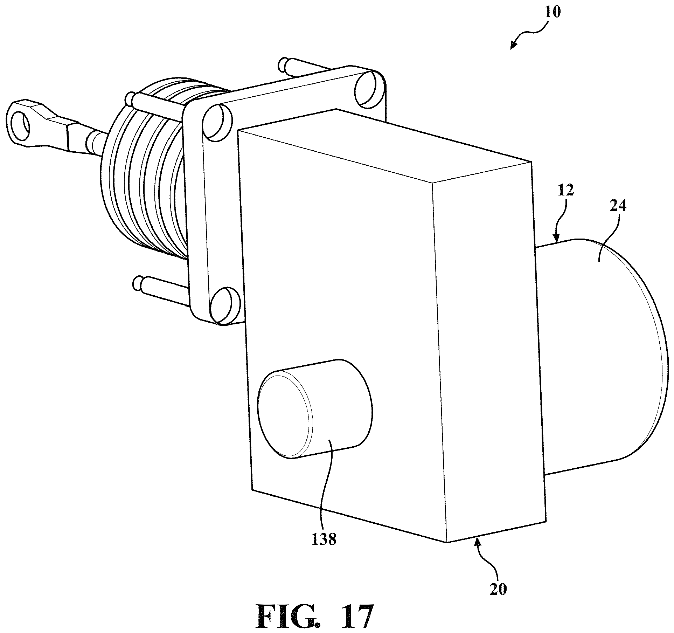

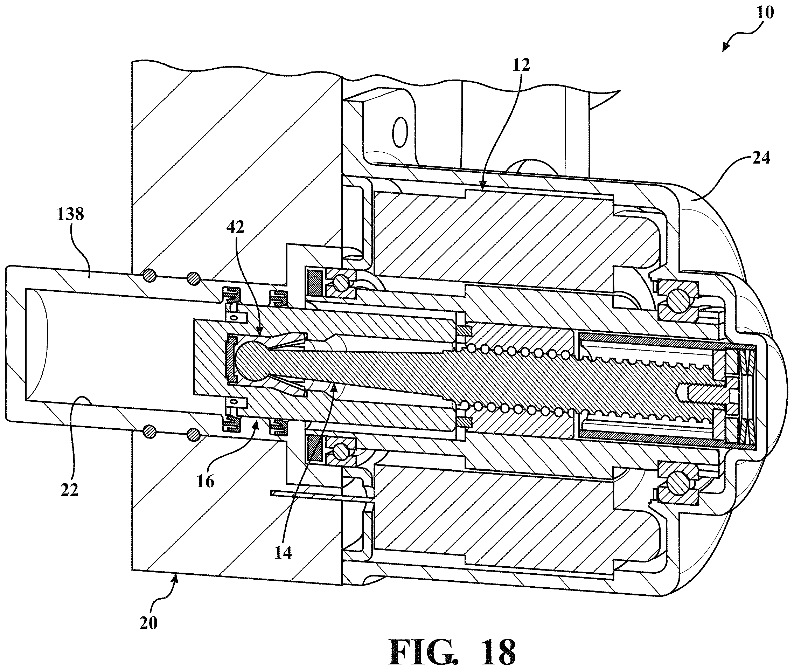

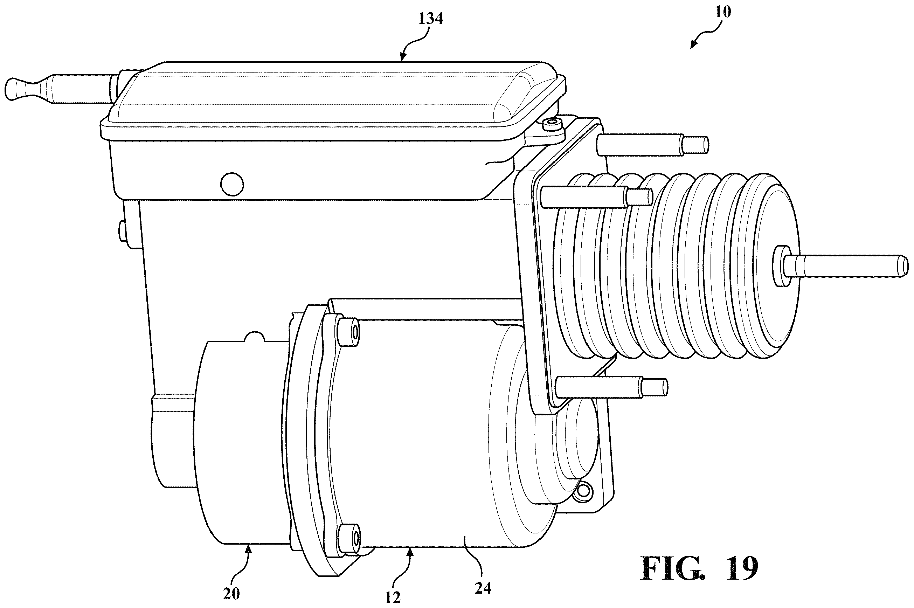

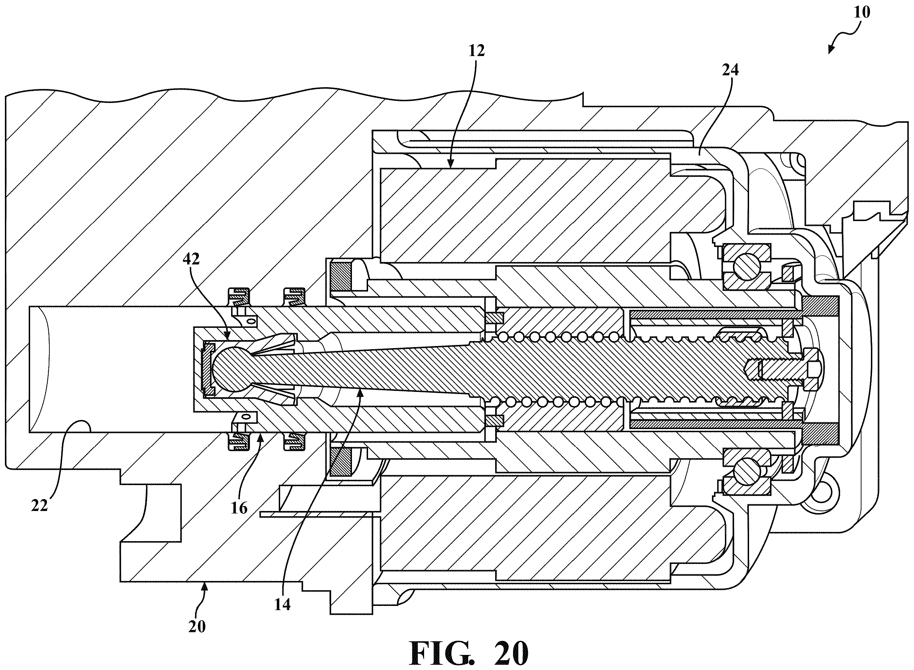

As demonstrated by FIGS. 15-20, a design advantage of the subject pressure supply unit 10 is that the motor 12 and piston 16 require no external feature in the cylinder 22 to restrain rotation of the piston 16. Accordingly, even though the overall length of the motor 12 may be relatively long, savings in length of the cylinder 22 can compensate for this. To this point, three different embodiments for packaging the system are shown in FIGS. 15-20. More particularly, FIGS. 15-16 show a first design in which a single master cylinder HCU block (anti-lock brake system controller) 132 has an extruded, transverse boss 136 which defines the cylinder 22. The boss is integrally formed with the booster body 20. Furthermore, FIGS. 17-18 show a simplified sleeve 138 which defines the cylinder 22 (no rotational constraints necessary) that is coupled with a booster body 20 in which an extruded rectangular master cylinder / HCU block 132 is designed with a transverse motor 12. Furthermore, FIGS. 19-20 show a design in which a machined or cast and machined master cylinder block 134 is incorporated with a parallel motor 12 layout.

It should be appreciated that the simple assembly of the overall design of the subject pressure supply unit 10 provides cost savings advantages, elimination of critical build tolerance, and assembly processes geared to high volume production.

Obviously, many modifications and variations of the present invention are possible in light of the above teachings. Notably, features of the embodiments described herein may be used in conjunction with one another in various combinations.

## Claims

1. A pressure supply unit (10) for a brake system, comprising:
a booster body (20) defining a cylinder (22) extending along an axis (A);
a piston (16) axially slideable within the cylinder (22);
the piston (16) defining a bore (28) along the axis (A);
a spindle (14) extending along the axis (A) and received by the bore (28) of the piston (16) and rotationally fixed and axially moveable for providing the axial movement of the piston (16); and
a motor positioned about the spindle (14) and configured to axially translate the spindle (14) for providing the axial movement of the piston (16);
wherein the pressure supply unit (10) further comprises a ball and socket joint (42) coupling the spindle (14) to the piston (16) and located within the bore (28) defined by the piston (16), the ball and socket joint (42) comprising a ball (102) at a front end of the spindle (14) and a socket (104) in the bore (28) of the piston (16) and receiving the ball (102) to accommodate pivoting movement of the spindle (14) relative to the piston (16),
**characterized in that** the ball (102) defines at least one scored segment (108) for providing lateral movement of the ball (102) relative to the socket (104) while allowing the ball (102) to inhibit axial movement of the ball (102) outside of the socket (104), wherein the ball (102) defines a plurality of scored segments (108) in spaced relationship with one another.

2. The pressure supply unit as set forth in claim 1, wherein the bore (28) of the piston (16) terminates at an end, and wherein the socket (104) is located adjacent to the end of the bore (28).

3. The pressure supply unit as set forth in claim 2, wherein an insert (106) is received in the bore (28) or the piston (16) and fixed to the piston (16) adjacent to the end of the bore (28), and wherein the insert (106) defines the socket (104).

4. The pressure supply unit as set forth in any one of Claims 1 to 3 further comprising a nut (56) fixed to the inner wall (50) of the rotor (46), the nut (56) presenting a threaded inner surface (58) threadedly connected to a threaded outer surface (40) of the spindle (14) for providing the axial movement of the spindle (14) in response to rotation of the rotor (46) and the nut (56).

5. The pressure supply unit as set forth in claim 4, wherein the rotor (46) presents an inner wall (50) defining a plurality of grooves (54) extending axially and circumferentially spaced from one another, wherein a retainer plate (64) is fixed axially against an end of the nut (56), and wherein the retainer plate (64) presents a plurality of guides (68) extending radially outwardly from an outer circumference of the retainer plate (64) and each received by one of the grooves (54) of the rotor (46) to permit axially movement of the retainer plate (64) and nut (56) relative to the rotor (46) during assembly while inhibiting rotational movement of the retainer plate (64) and nut (56) relative to the rotor (46).

6. The pressure supply unit as set forth in claim 5, wherein a plurality of fasteners (66) axially and rotationally fix the retainer plate (64) to the first nut end (60).

7. The pressure supply unit as set forth in any one of claims 1 to 6 further comprising an anti-rotation sleeve (70) disposed about the spindle (14) and fixed to the motor cover (24) and configured to inhibit rotation of the spindle (14) while permitting axial movement of the spindle (14).

8. The pressure supply unit as set forth in claim 7, wherein a motor cover (24) is coupled to the booster body (20) and defines a compartment (26), wherein the motor and anti-rotation sleeve (70) are located in the compartment (26), and wherein the motor cover (24) presents an axially extending annular protrusion (90) defining a pocket (92) inside the compartment (26) inside the motor cover (24), and wherein the anti-rotation sleeve (70) is rotationally fixed to the motor cover (24) inside the pocket (92).

9. The pressure supply unit as set forth in claim 8, wherein the anti-rotation sleeve (70) presents at least one planar surface (98) along a radially outer surface of the anti-rotation sleeve (70), and wherein the motor cover (24) defines a staked portion (99) radially engaging the at least one planar surface (98) to rotationally fix the anti-rotation sleeve (70) relative to the motor cover (24).

10. The pressure supply unit as set forth in any one of claims 1 to 9, wherein at least one gear (122, 124) is rotatable with the rotor (46) and configured to rotate a magnet (128), and wherein a sensor detects rotation of the magnet (128) to determine a rotor angle, particularly wherein the at least one gear (122, 124) comprises a first gear (122) connected to the rotor (46), and a second gear (124) meshed with the first gear (122), and wherein a rod (126) is connected with the second gear (124), and wherein the magnet (128) is coupled with an end of the rod (126) located opposite the second gear (124).

11. The pressure supply unit as set forth in any one of claims 1 to 10, wherein the motor (12) comprises: an annular stator (44) and an annular rotor (46) rotatable within the stator (44) in response to a current passing into the stator (44); and wherein the pressure supply unit (10) further comprises at least one gear (122, 124) rotatable in response to rotation of the rotor (46) and configured to rotate a magnet (128), and a sensor for detecting rotation of the magnet (128) to determine a rotor angle of the rotor (46).

12. The pressure supply unit as set forth in claim 11, wherein the at least one gear comprises (122, 124) a first gear (122) positioned about and rotatable with the rotor (46), and a second gear (124) meshed with the first gear (122) and configured to rotate the magnet (128),
particularly wherein a rod (126) is connected with the second gear (124), and wherein the magnet (128) is coupled with an end of the rod (126) located opposite the second gear (124).

13. The pressure supply unit as set forth in any one of claims 1 to 12, further comprising: a motor cover (24) coupled to the booster body (20) and defining a compartment (26),
wherein the motor (12) is positioned about the spindle (14) in the compartment (26) of the motor cover (24);
the motor (12) comprises an annular stator (44) and an annular rotor (46) rotatable within the stator (44) in response to a current passing into the stator (44);
wherein the pressure supply unit (10) further comprises an anti-rotation sleeve (70) disposed about the spindle (14) and fixed to the motor cover (24) and inhibiting rotation of the spindle (14) while permitting axial movement of the spindle (14); and
the motor cover (24) presents an axially extending annular protrusion (90) defining a pocket (92) inside the compartment (26) inside the motor cover (24), and the anti-rotation sleeve (70) is rotationally fixed to the motor cover (24) inside the pocket (92).

14. The pressure supply unit as set forth in claim 13, wherein the anti-rotation sleeve (70) presents at least one planar surface (98) along a radially outer surface of the anti-rotation sleeve (70), and wherein the motor cover (24) defines at least one staked portion (99) engaging the at least one planar surface (98) for rotationally fixing the anti-rotation sleeve (70) to the motor cover (24),
particularly wherein the at least one planar surface (98) of the anti-rotation sleeve (70) is a pair of planar surfaces (98) positioned on circumferentially opposite sides of the pocket (92), and wherein the at least one staked portion (99) comprises a pair of staked portions (99) each engaging one of the planar surfaces (98), and/or
particularly wherein the at least one staked portion (99) of the motor cover (24) defines an inner planar surface aligned with the at least one planar surface of the anti-rotation sleeve (70) for further preventing rotation of the anti-rotation sleeve (70) relative to the motor cover (24).

## Patentansprüche

1. Eine Druckversorgungseinheit (10) für ein Bremssystem, bestehend aus:
einem Verstärkerkörper (20), der einen sich entlang einer Achse (A) erstreckenden Zylinder (22) definiert;
einem Kolben (16), der axial in dem Zylinder (22) verschiebbar ist;
der Kolben (16) definiert eine Bohrung (28) entlang der Achse (A);
einer Spindel (14), die sich entlang der Achse (A) erstreckt und von der Bohrung (28) des Kolbens (16) aufgenommen wird und drehfest und axial beweglich ist, um die axiale Bewegung des Kolbens (16) zu ermöglichen; und
einem Motor, der um die Spindel (14) herum angeordnet und so konfiguriert ist, dass er die Spindel (14) axial verschiebt, um die axiale Bewegung des Kolbens (16) zu bewirken;
wobei die Druckversorgungseinheit (10) ferner ein Kugelgelenk (42) umfasst, das die Spindel (14) mit dem Kolben (16) koppelt und innerhalb der durch den Kolben (16) definierten Bohrung (28) angeordnet ist, wobei das Kugelgelenk (42) eine Kugel (102) an einem vorderen Ende der Spindel (14) und eine Buchse (104) in der Bohrung (28) des Kolbens (16) umfasst und die Kugel (102) aufnimmt, um eine Schwenkbewegung der Spindel (14) relativ zum Kolben (16) zu ermöglichen,
**dadurch gekennzeichnet, dass** die Kugel (102) mindestens ein eingekerbtes Segment (108) definiert, um eine seitliche Bewegung der Kugel (102) relativ zu der Buchse (104) zu ermöglichen, während es der Kugel (102) ermöglicht wird, eine axiale Bewegung der Kugel (102) außerhalb der Buchse (104) zu verhindern, wobei die Kugel (102) eine Vielzahl von eingekerbten Segmenten (108) in beabstandeter Beziehung zueinander definiert.

2. Die Druckversorgungseinheit nach Anspruch 1, wobei die Bohrung (28) des Kolbens (16) an einem Ende endet, und wobei die Buchse (104) neben dem Ende der Bohrung (28) angeordnet ist.

3. Die Druckversorgungseinheit nach Anspruch 2, wobei ein Einsatz (106) in der Bohrung (28) oder dem Kolben (16) aufgenommen und am Kolben (16) nahe dem Ende der Bohrung (28) befestigt ist, und wobei der Einsatz (106) die Buchse (104) definiert.

4. Die Druckversorgungseinheit nach einem der Ansprüche 1 bis 3, die ferner eine an der Innenwand (50) des Rotors (46) befestigte Mutter (56) aufweist, wobei die Mutter (56) eine mit einem Gewinde versehene Innenfläche (58) aufweist, die mit einer mit einem Gewinde versehenen Außenfläche (40) der Spindel (14) verschraubt ist, um die axiale Bewegung der Spindel (14) in Reaktion auf die Drehung des Rotors (46) und der Mutter (56) zu bewirken.

5. Die Druckversorgungseinheit nach Anspruch 4, wobei der Rotor (46) eine Innenwand (50) aufweist, die eine Vielzahl von Nuten (54) definiert, die sich axial und in Umfangsrichtung voneinander beabstandet erstrecken, wobei eine Halteplatte (64) axial gegen ein Ende der Mutter (56) befestigt ist, und wobei die Halteplatte (64) eine Vielzahl von Führungen (68) aufweist, die sich von einem Außenumfang der Halteplatte (64) radial nach außen erstrecken und jeweils von einer der Nuten (54) des Rotors (46) aufgenommen werden, um eine axiale Bewegung der Halteplatte (64) und der Mutter (56) relativ zum Rotor (46) während der Montage zu ermöglichen, während eine Drehbewegung der Halteplatte (64) und der Mutter (56) relativ zum Rotor (46) verhindert wird.

6. Die Druckversorgungseinheit nach Anspruch 5, bei der eine Vielzahl von Befestigungselementen (66) die Halteplatte (64) axial und drehbar an dem ersten Mutterende (60) befestigt.

7. Die Druckversorgungseinheit nach einem der Ansprüche 1 bis 6, die ferner eine um die Spindel (14) herum angeordnete und an der Motorabdeckung (24) befestigte Verdrehsicherungshülse (70) umfasst, die so konfiguriert ist, dass sie die Drehung der Spindel (14) verhindert, aber eine axiale Bewegung der Spindel (14) zulässt.

8. Die Druckversorgungseinheit nach Anspruch 7, wobei eine Motorabdeckung (24) mit dem Verstärkerkörper (20) gekoppelt ist und ein Fach (26) definiert, wobei der Motor und die Verdrehsicherungshülse (70) in dem Fach (26) angeordnet sind, und wobei die Motorabdeckung (24) einen sich axial erstreckenden ringförmigen Vorsprung (90) aufweist, der eine Tasche (92) innerhalb des Fachs (26) innerhalb der Motorabdeckung (24) definiert, und wobei die Verdrehsicherungshülse (70) drehbar an der Motorabdeckung (24) innerhalb der Tasche (92) befestigt ist.

9. Die Druckversorgungseinheit nach Anspruch 8, wobei die Verdrehsicherungshülse (70) mindestens eine ebene Oberfläche (98) entlang einer radial äußeren Oberfläche der Verdrehsicherungshülse (70) aufweist, und wobei die Motorabdeckung (24) einen abgesteckten Abschnitt (99) definiert, der radial in die mindestens eine ebene Oberfläche (98) eingreift, um die Verdrehsicherungshülse (70) relativ zur Motorabdeckung (24) drehbar zu fixieren.

10. Die Druckversorgungseinheit nach einem der Ansprüche 1 bis 9, wobei mindestens ein Zahnrad (122, 124) mit dem Rotor (46) drehbar ist und so konfiguriert ist, dass es einen Magneten (128) dreht, und wobei ein Sensor die Drehung des Magneten (128) erfasst, um einen Rotorwinkel zu bestimmen, insbesondere wobei das mindestens eine Zahnrad (122, 124) ein erstes Zahnrad (122) umfasst, das mit dem Rotor (46) verbunden ist, und ein zweites Zahnrad (124), das mit dem ersten Zahnrad (122) kämmt, und wobei eine Stange (126) mit dem zweiten Zahnrad (124) verbunden ist, und wobei der Magnet (128) mit einem Ende der Stange (126) gekoppelt ist, das dem zweiten Zahnrad (124) gegenüberliegt.

11. Die Druckversorgungseinheit nach einem der Ansprüche 1 bis 10, wobei der Motor (12) Folgendes umfasst: einen ringförmigen Stator (44) und einen ringförmigen Rotor (46), der in Reaktion auf einen in den Stator (44) fließenden Strom innerhalb des Stators (44) drehbar ist; und
wobei die Druckversorgungseinheit (10) ferner mindestens ein Zahnrad (122, 124), das in Reaktion auf die Drehung des Rotors (46) drehbar ist und so konfiguriert ist, dass es einen Magneten (128) dreht, und einen Sensor zum Erfassen der Drehung des Magneten (128) umfasst, um einen Rotorwinkel des Rotors (46) zu bestimmen.

12. Die Druckversorgungseinheit nach Anspruch 11, wobei das mindestens eine Zahnrad (122, 124) ein erstes Zahnrad (122), das um den Rotor (46) herum angeordnet und mit diesem drehbar ist, und ein zweites Zahnrad (124) umfasst, das mit dem ersten Zahnrad (122) kämmt und so konfiguriert ist, dass es den Magneten (128) dreht, wobei insbesondere eine Stange (126) mit dem zweiten Zahnrad (124) verbunden ist, und wobei der Magnet (128) mit einem Ende der Stange (126) gekoppelt ist, das dem zweiten Zahnrad (124) gegenüberliegt.

13. Die Druckversorgungseinheit nach einem der Ansprüche 1 bis 12, ferner umfassend:
eine Motorabdeckung (24), die mit dem Verstärkerkörper (20) verbunden ist und ein Fach (26) definiert,
wobei der Motor (12) um die Spindel (14) in dem Fach (26) der Motorabdeckung (24) angeordnet ist;
der Motor (12) einen ringförmigen Stator (44) und einen ringförmigen Rotor (46) aufweist, der innerhalb des Stators (44) in Reaktion auf einen in den Stator (44) fließenden Strom drehbar ist;
wobei die Druckversorgungseinheit (10) ferner eine um die Spindel (14) herum angeordnete und an der Motorabdeckung (24) befestigte Verdrehsicherungshülse (70) aufweist, die eine Drehung der Spindel (14) verhindert, während sie eine axiale Bewegung der Spindel (14) zulässt; und
die Motorabdeckung (24) einen sich axial erstreckenden ringförmigen Vorsprung (90) aufweist, der eine Tasche (92) innerhalb des Fachs (26) innerhalb der Motorabdeckung (24) definiert, und die Verdrehsicherungshülse (70) drehbar an der Motorabdeckung (24) innerhalb der Tasche (92) befestigt ist.

14. Die Druckversorgungseinheit nach Anspruch 13, wobei die Verdrehsicherungshülse (70) mindestens eine ebene Oberfläche (98) entlang einer radial äußeren Oberfläche der Verdrehsicherungshülse (70) aufweist, und wobei die Motorabdeckung (24) mindestens einen abgesteckten Abschnitt (99) definiert, der in die mindestens eine ebene Oberfläche (98) eingreift, um die Verdrehsicherungshülse (70) an der Motorabdeckung (24) drehbar zu befestigen,
wobei insbesondere die mindestens eine ebene Oberfläche (98) der Verdrehsicherungshülse (70) ein Paar von ebenen Oberflächen (98) ist, die auf in Umfangsrichtung gegenüberliegenden Seiten der Tasche (92) angeordnet sind, und wobei der mindestens eine abgesteckte Abschnitt (99) ein Paar von abgesteckten Abschnitten (99) umfasst, die jeweils in eine der ebenen Oberflächen (98) eingreifen, und/oder
wobei insbesondere der mindestens eine abgesteckte Abschnitt (99) der Motorabdeckung (24) eine innere ebene Oberfläche definiert, die mit der mindestens einen ebenen Oberfläche der Verdrehsicherungshülse (70) ausgerichtet ist, um eine weitere Drehung der Verdrehsicherungshülse (70) relativ zur Motorabdeckung (24) zu verhindern.

## Revendications

1. Une unité d'alimentation en pression (10) pour un système de freinage, comprenant:
un corps de propulseur (20) définissant un cylindre (22) s'étendant le long d'un axe (A);
un piston (16) pouvant coulisser axialement à l'intérieur du cylindre (22);
le piston (16) définissant un alésage (28) le long de l'axe (A);
une broche (14) s'étendant le long de l'axe (A) et reçue par l'alésage (28) du piston (16), fixe en rotation et mobile axialement pour assurer le mouvement axial du piston (16); et
un moteur positionné autour de la broche (14) et configuré pour déplacer axialement la broche (14) afin d'assurer le mouvement axial du piston (16);
dans laquelle l'unité d'alimentation en pression (10) comprend en outre une articulation à rotule (42) reliant la broche (14) au piston (16) et située dans l'alésage (28) défini par le piston (16), l'articulation à rotule (42) comprenant une rotule (102) à une extrémité avant de la broche (14) et une douille (104) dans l'alésage (28) du piston (16) et recevant la rotule (102) pour permettre le mouvement de pivotement de la broche (14) par rapport au piston (16),
**caractérisée en ce que** la rotule (102) définit au moins un segment rainuré (108) pour assurer le mouvement latéral de la rotule (102) par rapport à la douille (104) tout en permettant à la rotule (102) d'inhiber le mouvement axial de la rotule (102) à l'extérieur de la douille (104), dans laquelle la rotule (102) définit une pluralité de segments rainurés (108) en relation espacée les uns avec les autres.

2. L'unité d'alimentation en pression selon la revendication 1, dans laquelle l'alésage (28) du piston (16) se termine à une extrémité, et dans laquelle la douille (104) est située à côté de l'extrémité de l'alésage (28).

3. L'unité d'alimentation en pression selon la revendication 2, dans laquelle un insert (106) est reçu dans l'alésage (28) ou le piston (16) et fixé au piston (16) adjacent à l'extrémité de l'alésage (28), et dans laquelle l'insert (106) définit la douille (104).

4. L'unité d'alimentation en pression décrite dans l'une quelconque des revendications 1 à 3 comprend en outre un écrou (56) fixé à la paroi intérieure (50) du rotor (46), l'écrou (56) présentant une surface intérieure filetée (58) reliée par filetage à une surface extérieure filetée (40) de la broche (14) pour assurer le mouvement axial de la broche (14) en réponse à la rotation du rotor (46) et de l'écrou (56).

5. L'unité d'alimentation en pression selon la revendication 4, dans laquelle le rotor (46) présente une paroi intérieure (50) définissant une pluralité de rainures (54) s'étendant axialement et espacées circonférentiellement les unes des autres, dans laquelle une plaque de retenue (64) est fixée axialement contre une extrémité de l'écrou (56), et dans laquelle la plaque de retenue (64) présente une pluralité de guides (68) s'étendant radialement vers l'extérieur à partir d'une circonférence extérieure de la plaque de retenue (64) et chacun reçu par l'une des rainures (54) du rotor (46) pour permettre le mouvement axial de la plaque de retenue (64) et de l'écrou (56) par rapport au rotor (46) pendant l'assemblage tout en inhibant le mouvement de rotation de la plaque de retenue (64) et de l'écrou (56) par rapport au rotor (46).

6. L'unité d'alimentation en pression selon la revendication 5, dans laquelle une pluralité de fixations (66) fixent axialement et en rotation la plaque de retenue (64) à la première extrémité de l'écrou (60).

7. L'unité d'alimentation en pression selon l'une des revendications 1 à 6 comprend en outre un manchon anti-rotation (70) disposé autour de la broche (14) et fixé au capot moteur (24) et configuré pour inhiber la rotation de la broche (14) tout en permettant un mouvement axial de la broche (14).

8. L'unité d'alimentation en pression selon la revendication 7, dans laquelle un capot moteur (24) est couplé au corps de propulseur (20) et définit un compartiment (26), dans lequel le moteur et le manchon anti-rotation (70) sont situés dans le compartiment (26), et dans lequel le capot moteur (24) présente une protubérance annulaire s'étendant axialement (90) définissant une poche (92) à l'intérieur du compartiment (26) à l'intérieur du capot moteur (24), et dans lequel le manchon anti-rotation (70) est fixé en rotation au capot moteur (24) à l'intérieur de la poche (92).

9. L'unité d'alimentation en pression selon la revendication 8, dans laquelle le manchon anti-rotation (70) présente au moins une surface plane (98) le long d'une surface radialement extérieure du manchon anti-rotation (70), et dans laquelle le capot moteur (24) définit une partie piquetée (99) s'engageant radialement dans l'au moins une surface plane (98) pour fixer en rotation le manchon anti-rotation (70) par rapport au capot moteur (24).

10. L'unité d'alimentation en pression selon l'une quelconque des revendications 1 à 9, dans laquelle au moins un engrenage (122, 124) est rotatif avec le rotor (46) et configuré pour faire tourner un aimant (128), et dans laquelle un capteur détecte la rotation de l'aimant (128) pour déterminer un angle de rotor, en particulier dans laquelle l'au moins un engrenage (122, 124) comprend un premier engrenage (122) relié au rotor (46), et un second engrenage (124) engrené avec le premier engrenage (122), et dans lequel une tige (126) est reliée au second engrenage (124), et dans lequel l'aimant (128) est couplé à une extrémité de la tige (126) située à l'opposé du second engrenage (124).

11. L'unité d'alimentation en pression selon l'une des revendications 1 à 10, dans laquelle le moteur (12) comprend : un stator annulaire (44) et un rotor annulaire (46) pouvant tourner dans le stator (44) en réponse à un courant passant dans le stator (44) ; et dans laquelle l'unité d'alimentation en pression (10) comprend en outre au moins un engrenage (122, 124) pouvant tourner en réponse à la rotation du rotor (46) et configuré pour faire tourner un aimant (128), et un capteur pour détecter la rotation de l'aimant (128) afin de déterminer un angle de rotation du rotor (46).

12. L'unité d'alimentation en pression selon la revendication 11, dans laquelle l'au moins un engrenage (122, 124) comprend un premier engrenage (122) positionné autour et rotatif avec le rotor (46), et un second engrenage (124) engrené avec le premier engrenage (122) et configuré pour faire tourner l'aimant (128), en particulier dans lequel une tige (126) est connectée au second engrenage (124), et dans lequel l'aimant (128) est couplé à une extrémité de la tige (126) située à l'opposé du second engrenage (124).

13. L'unité d'alimentation en pression telle que décrite dans l'une des revendications 1 à 12, comprenant en outre: un capot moteur (24) couplé au corps de propulseur (20) et définissant un compartiment (26),
dans lequel le moteur (12) est positionné autour de la broche (14) dans le compartiment (26) du capot moteur (24);
le moteur (12) comprend un stator annulaire (44) et un rotor annulaire (46) rotatif à l'intérieur du stator (44) en réponse à un courant passant dans le stator (44);
l'unité d'alimentation en pression (10) comprend en outre un manchon anti-rotation (70) disposé autour de la broche (14) et fixé au capot moteur (24) et empêchant la rotation de la broche (14) tout en permettant un mouvement axial de la broche (14); et
le capot moteur (24) présente une protubérance annulaire (90) s'étendant axialement et définissant une poche (92) à l'intérieur du compartiment (26) à l'intérieur du capot moteur (24), et le manchon anti-rotation (70) est fixé en rotation au capot moteur (24) à l'intérieur de la poche (92).

14. L'unité d'alimentation en pression selon la revendication 13, dans laquelle le manchon anti-rotation (70) présente au moins une surface plane (98) le long d'une surface radiale extérieure du manchon anti-rotation (70), et dans laquelle le capot moteur (24) définit au moins une partie piquetée (99) s'engageant dans la au moins une surface plane (98) pour fixer en rotation le manchon anti-rotation (70) au capot moteur (24), en particulier dans lequel la au moins une surface plane (98) du manchon anti-rotation (70) est une paire de surfaces planes (98) positionnées sur des côtés circonférentiellement opposés de la poche (92), et dans laquelle l'au moins une partie piquetée (99) comprend une paire de parties piquetées (99) engageant chacune l'une des surfaces planes (98), et/ou en particulier dans laquelle l'au moins une partie piquetée (99) du capot moteur (24) définit une surface plane intérieure alignée avec l'au moins une surface plane du manchon anti-rotation (70) pour empêcher davantage la rotation du manchon anti-rotation (70) par rapport au capot moteur (24).
